Europäisches Patentamt

European Patent Office

Office européen des brevets

(19)

(11)  EP 1 092 178 B1

(12)  EUROPEAN PATENT SPECIFICATION

(45) Date of publication and mention
of the grant of the patent:
**04.08.2004  Bulletin 2004/32**

(21) Application number: **00910796.2**

(22) Date of filing: **09.03.2000**

(51) Int Cl.⁷: **G05B 19/4099**

(86) International application number:
**PCT/EP2000/002075**

(87) International publication number:
**WO 2000/060426 (12.10.2000 Gazette 2000/41)**

(54) **METHOD OF ASSIGNING A TWO-DIMENSIONAL DECORATIVE PATTERN TO A THREE DIMENSIOINAL SURFACE.**

VERFAHREN ZUR ÜBERTRAGUNG EINES ZWEI-DIMENSIONALEN DEKORATIVEN MUSTERS AUF EINE DREI DIMENSIONALE OBERFLÄCHE

METHODE POUR APPLIQUER UN MOTIF DECORATIF BIDIMENSIONEL SUR UNE SURFACE TRIDIMENSIONELLE

(84) Designated Contracting States:
**DE ES FR GB IT**

(30) Priority: **31.03.1999  EP 99201024**

(43) Date of publication of application:
**18.04.2001  Bulletin 2001/16**

(73) Proprietor: **Koninklijke Philips Electronics N.V.
5621 BA Eindhoven (NL)**

(72) Inventor: **SCHALLIG, Michiel, A., A.
NL-5656 AA Eindhoven (NL)**

(74) Representative: **Schouten, Marcus Maria et al
Philips
Intellectual Property & Standards
P.O. Box 220
5600 AE Eindhoven (NL)**

(56) References cited:
EP-A- 0 855 687          EP-A- 0 889 437
FR-A- 2 748 590          US-A- 5 550 960
US-A- 5 556 491          US-A- 5 570 292
US-A- 5 736 991

• HUANG G Q ET AL: "Design for manufacture and assembly on the Internet" , COMPUTERS IN INDUSTRY,NL,ELSEVIER SCIENCE PUBLISHERS. AMSTERDAM, VOL. 38, NR. 1, PAGE(S) 17-30 XP004152189 ISSN: 0166-3615

## Description

The invention relates to a method of assigning a two-dimensional decorative pattern to a surface of an object such as a housing of a domestic appliance. A consumer product like a household appliance or shaver is usually mass-manufactured, and as a result the product is offered for sale as one of series of uniform products. However, it is expected that buyers want to buy unique, personal products, different from products bought by other people. For example, when buying a shaver or a household appliance, the buyer would like to obtain a personal product. The buyer wants the product to say something about him- or herself and that distinguishes him- or herself from others.

The design and manufacture of unique products conflicts with the needs of mass-manufacture and its benefits like low-cost and consistent quality control. As a result, a product is usually offered for sale either as one from a series of uniform products at a reasonably low price or the buyer has to order that a unique, personal product be made for him or her individually at a considerably higher price. A significant demand could be satisfied if it could be made possible to offer the buyer the power to order manufacture his or her unique, personal product, while retaining the essential advantages of mass-manufacture.

Products can be made unique and personal by applying unique decorations to their surface. A known manufacturing technique for decorating three-dimensional products involves pasting two-dimensional decorations onto the surface of the products (the products themselves being rigid non-flat three-dimensional objects). For example, a method of applying a decoration to ceramics is disclosed in an article by C.K.Chua, W. Hoheisel, G.Keller and E.Werling, titled "Adapting decorative patterns for ceramic tableware" and published in the Computing & Control Engineering Journal. October 1993 pages 209 to 217. This article discusses the design and production of so-called "decals": printed transfers with decorative patterns that are pasted onto objects like dishes etc. The decorative patterns are made up of a repetition of a basic pattern. The article focuses on the generation of the repetition and the adaptations needed to conform to the shape of the object. These adaptations include scaling the basic pattern so that an integer number of basic patterns occurs along a rim of the object, adaptation to achieve a circular disposition of the basic pattern on a surface of the object etc.

As can be seen, application of the decoration requires familiarity with the shape of the object and some expertise to adapt the flat decoration to the shape of the object. In the known method this has to be done by an expert who is familiar with the design process and the shape of the object. Offering the service of such an expert to the buyer who wants to order a unique, personal product is inconsistent with the need to design and manufacture the product at low cost.

Moreover, the known method is limited to application of decorations to surfaces that are essentially planar, so that they can be unfolded to a flat surface. Decorations cannot easily be applied (at low cost) to other surfaces that have a more complex curvature. Adaptation to the curvature of the objects is limited to bending the decoration plane around the object surface. This presents problems if the surface of the object is curved in more than one direction at a location on the surface where the decoration is applied, such as on a saddle shaped surface for example. In that case, the pattern cannot follow the surface without deformations like changes in the angles between lines in the decoration. Adaptation to such a surface with curvature in two directions could be realized by projecting the decoration onto the surface, as it where through a slide, pattern locations on the surface being defined by the intersection between the surface and rays through the pattern on the slide. However, this also leads to undesirable deformations in case of a surface with curvature in two directions, for example in the neighborhood of singular points where the rays intersect the surface at a large angle to its normal.

US 5,556,491 furthermore discloses a method for manufacturing adhesive elements to be applied to a three-dimensional surface for decorating the surface, the elements comprising two-dimensional elements to be adhered to areas of said three-dimensional surface.

What is needed is a method of offering personalized products to buyers of individual products, in a way that allows a price consistent with mass-manufacture.

Amongst others, it is an object of the invention to make it economically feasible to deliver object with a personalized decoration on demand by buyer.

Amongst others, it is an object of the invention to provide for a process of applying decorations with fewer distortions to a surface that is curved in more than one direction.

It is another object of the invention to simplify the application of different decorative patterns onto surfaces with the same shape.

It is another object of the invention to make it possible to deliver objects decorated to order, for orders received after definition of surface, while production of objects is already running.

The method of assigning a two-dimensional decorative pattern to a surface of a three-dimensional object according to the invention comprises:

- defining the shape of the surface of the object using a mapping function which defines three-dimensional coordinates of locations on said surface as a function of two-dimensional surface coordinate pairs;
- defining the decorative pattern as a series of points specified in terms of two-dimensional pattern coordinate pairs;
- assigning each of the points of the decorative pattern to locations on the surface of the object by firstly assigning a two-dimensional surface coordinate pair to each point of the decorative pattern and then by using the mapping function to assign corresponding three-dimensional coordinates to each of these two-dimensional surface coordinate pairs.

By using the definition of the shape of the product, the decoration is automatically mapped and applied to the surface of the object. The shape is designed in common for a series of objects and mapping is performed automatically by computer, which allows manufacture and design at costs near that of mass-production. Furthermore, the buyer is given the opportunity to specify the decoration using a switching network, such as the internet.

Preferably, the shape of the surface is defined using the parameters of a mapping function from two-dimensions to a three dimensional surface, such as a NURBS (Non Uniform Rational B Spline) function. Thus points on the surface lie at the same relative positions as the points to which different point in the two dimensions are mapped. The use of parameters makes it easy to determine the mapping of positions in the pattern to points on the surface.

The map which is used to shape the surface is reused for assigning points of a pattern to locations on the surface, so as to control the operation of applying the decoration. This also avoids problems with singular points. It has been found that this reduces unattractive deformations. Preferably a NURBS function (Non Uniform Rational B Spline function) is used to define the shape of the object. Such a function defines the coordinate vectors R of locations on the surface as a function of two-dimensional surface coordinates (u,v). The movement may be along lines that make up the pattern. This minimizes the required amount of movement, be it at the expense of computing relative positions for each different pattern.

With the invention, the manufacture of a series objects can start before the pattern that is to be applied to an object of the series is known. The pattern can be received independent of the shape of the object. This makes it economically possible to sell objects such as domestic appliances or personal care products with a personalized design. The buyer orders such a product and submits his or her personal decoration as a description of an image. This description is sent to a factory, where the pattern is applied to the product by holding the object relative to a decoration applying tool so that the relative positions can be controlled in terms of design coordinates.

These and other advantageous aspects of the invention will be described by means of illustrative, but not exhaustive embodiments of the invention, using the following figures.

Figure 1 shows an object and a tool for modifying the properties of a surface of the object
Figure 2 shows a diagram of a system for controlling modification of the properties of the surface
Figure 3 shows a flow-chart of a method of modifying the properties of the surface.

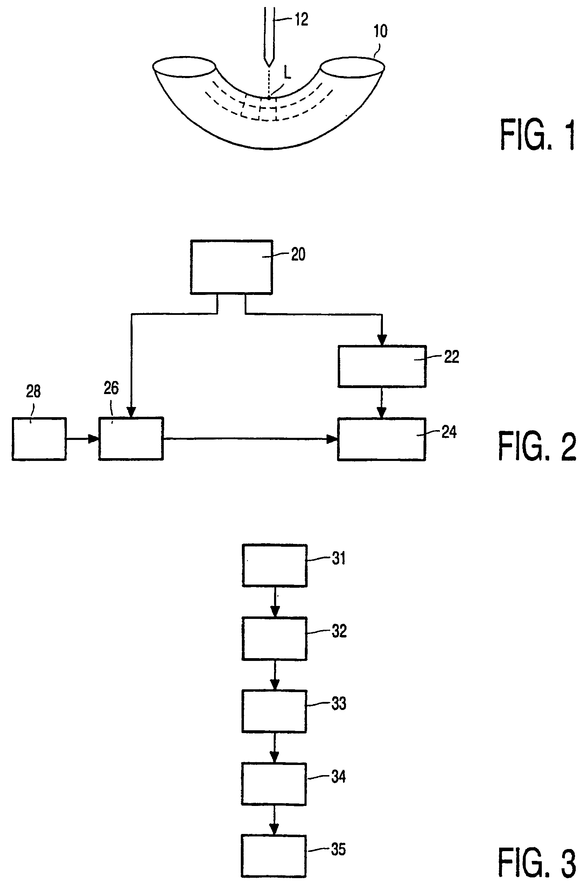

Figure 1 shows an object 10 that has a surface which is curved in two directions. For example, the location L on the surface is a saddlepoint, where the surface has a convex curvature in first direction and a concave curvature in a second direction perpendicular to the first direction.

Figure 1 also schematically shows a tool 12 positioned relative to the object 10 so as to modify the properties of the surface of the object 10. The tool 12 is for example a laser, positioned along the normal to the surface of the object 10 at the location L at a predetermined distance of the location L. Other examples of tools could be drill-head, a spark-erosion head, an inkjet printer head etc. These tools are preferably brought to a predetermined position and orientation to the surface point L where the object is to be modified. The laser is used for example to remove matter from the surface at the point L or to induce a reaction in a photosensitive layer on the surface at the point L.

Figure 2 shows a diagram of a system for controlling modification of the properties of the surface of the object 10. The system contains a design station 20, an object shaping station 22, a surface modifying station 24, a pattern input station 28 and a surface modifying control station 26.

A designer uses the design station to design the shape of the surface of the object. The shape of the surface is defined by a function that assigns coordinates R of the surface to two-dimensional surface coordinate pairs (u,v). A preferred example of such a function is the function used to define a NURBS surface A NURBSS defines the coordinates R of points on the surface by means of functions of two dimensional surface coordinates (u,v):

$$R = \mathrm{Sum}\ P_i * F_i(u,v)$$

Here the $P_i$, are the coordinates of so called control points which serve as parameters for defining the shape of the surface. The expression for R assigns an R-value to each value of the surface coordinates (u,v) and the R-values assigned to a continuous set of surface coordinates (u,v) defines a surface in three-dimensional space.

The designed shape of the surface is transferred to the object shaping station, where it is used to manufacture a series of objects with a surface that has the designed shape. Although the object shaping station is shown as a single station, it will usually be realized by a complex of equipment operating at different times, such as an NC controlled lathe that manufactures a mold for the object using the parameters of the designed shape and a molding machine for molding a series of objects in the mold.

Independent of the actual shaping process, the pattern input station 28 receives a pattern input. This is information describing a two-dimensional image, for example in terms of a bit-map with color and/or intensity values for a set of pixels (points) in the image, or in terms of the parameters of a number of lines in a two-dimensional plane that together make up the image. Any one of a number of formats can be used to represent this information, for example a postscript (TM) format or JPEG etc.

The pattern input is transferred from the pattern input station 28 to the surface modifying control station 26.

Various kinds of stations can be used as pattern input station 28. For example the pattern input station 28 may be a PC (personal computer) where the pattern is generated by scanning an image with a scanner, or with a drawing program. The pattern may be transmitted to the surface modifying control station 26 via the internet.

The surface modifying control station 26 may contain a complex of devices such as a world wide web server, with a WWW page that allows a customer to order a domestic appliance or a device for personal care (e.g. an electric shaver) with a personalized decoration. The WWW page provides for setting up transactions where the customer entitles the manufacturer to payment for the object and submits the pattern that should be applied to the object. At the end of the transaction, the surface modifying control station contains the pattern.

Alternatively, the surface modifying control station 26 may contain a terminal located in a retail shop, where a customer can submit the pattern and order his/ or her object. In this case, the retailer handles the transaction and sends the pattern to the surface modifying control station, for example also via the internet but one may also use a point to point modem line or even a physical delivery service.

The surface modifying control station 26 receives the pattern and uses it to control the surface modifying station 24. In this process, positions in the pattern are mapped to locations on the object. For this purpose, information describing the function used to define the shape of the object for the object shaping station 22 is reused. Coordinates (xp,yp) of points P in the pattern are assigned to two dimensional surface coordinates (up,vp) (e.g. using a linear relation: (up,vp)= (u0+a*x+b*y,v0+c*x+d*y) and the point P in the pattern is associated with the coordinates R of the location L that is assigned to the surface coordinates (up,vp).

The object 10 is held in a movable holder (not shown) so that the position of the object 10 relative to the tool 12 can be varied under control of the surface modifying control station, so that the coordinates R of the location of interaction between the tool 12 and the surface of the object 10 are known. Alternatively, the tool 10 may be moved relative to the object 10 or both may be moved relative to one another.

The tool 12 is positioned relative to the location L on the surface of the object 10 that corresponds to the coordinates R, so that the location L becomes the point of interaction between the object 10 and the tool 12. This is done for example using the vector components of the normal to the surface at the point L. These vector components are computed by means of the derivatives of the function that assigns three dimensional coordinates to two-dimensional surface coordinates (u,v). In this example, the object is moved so that the normal is aligned with the axis of the tool (e.g. the beam in case of a laser tool) with the location L at that axis at a predetermined distance from the tool (e.g. in the focus of optics of the laser). The surface is then modified at the location L by activating the tool (e.g. by irradiating the surface).

It has been found that this way of mapping the pattern onto the surface provides a natural way of mapping without disturbing distortions, especially when NURBS surfaces are used to define the shape of the object.

The tool 12 and the object 10 are positioned relative to one another sequentially at a series of relative positions, so that the locations L corresponding to a series of points in the pattern are successively brought to the point of interaction of the tool 12 and the object 10. At each location L the surface is modified according to the pattern.

In case the pattern is made up of a number of lines, the object and the tool may be positioned successively so that the locations L(t) corresponding to successive points P(t) on a line become to the point of interaction successively. Thus, the surface modifying station 24 traces the line along the surface of the object 10. Again, the coordinates (x(t),y(t)) of points P(t) are mapped to surface coordinates (u(t),v(t)) and the function that was used to shape the surface is reused to compute the coordinates R=F(u(t),v(t)) of the successive points of interaction.

Alternatively the surface modifying control station 26 moves the object 10 and the tool 12 to relative positions in a succession independent of the content of the pattern, along a series of locations L that correspond to a series of surface coordinate pairs (ui,vi) (i=0....). For example by scanning over the surface. The successive coordinate pairs are then used to retrieve the content of the pattern I(u,v) for the positions (ui,vi) and the content I(u,v) is used to modulate the interaction between the tool and the surface of the object 10 at the time that the location L assigned to the coordinates (ui,vi) is at the point of interaction.

Figure 3 summarizes the steps of the method according to the invention. In a first step 31, the parameters of the function that relates two dimensional surface coordinates to three dimensional coordinates. In a second step 32, the object is manufactured with a surface shaped according to the function. In a third step 33, a pattern is received. In a fourth step 34, points in the pattern are associated with locations on the object, by mapping the points in the pattern to two-dimensional (u,v) surface coordinates and assigning three dimensional coordinates R to the these (u,v) coordinates according to the function according to which the surface of the object has been shaped. In a fifth step 35, the properties of the surface of the object are modified according to the pattern at the locations determined from the function according to which the surface of the object was shaped.

## Claims

**1.** A method of assigning a two-dimensional decorative pattern to a surface of a three-dimensional object (10), the process comprising the following steps:

- defining the shape of the surface of the object (10) using a mapping function which defines three-dimensional coordinates (R) of locations on said surface as a function of two-dimensional surface coordinate pairs (u,v);
- defining the decorative pattern as a series of points (P) specified in terms of two-dimensional pattern coordinate pairs (xp, yp);
- assigning each of the points (P) of the decorative pattern to locations on the surface of the object (10) by firstly assigning a two-dimensional surface coordinate pair (u,v) to each point (P) of the decorative pattern and then by using the mapping function to assign corresponding three-dimensional coordinates (R) to each of these two-dimensional surface coordinate pairs (u,v).

**2.** A method according to claim 1, the method further comprising the following steps:

- manufacturing the object (10) as part of a series of products, all with the defined shape;
- offering the object (10) for sale via a public switching network;
- setting up a computer (28) to receive an order for the object (10) via the public switching network, the order further enabling the user to specify the decorative pattern to be applied to the object (10),
- receiving the order in combination with the decorative pattern via the computer;
- applying the decorative pattern to the surface at the assigned locations as determined in the assigning step;
- delivering the object (10) to the buyer in repsonse to the order.

**3.** A method according to claim 1, the method further comprising the following steps:

- defining the shape of the surface of the object (10) using the mapping function, whereby the mapping function allows the defintion of surfaces which curve in at least two transversal directions around a location on the said surface;
- manufacturing the object (10) comprising the said surface shaped using the mapping function,
- during the assigning step, scanning through a series of positions in the pattern,
- positioning a surface modifying tool (12) and the surface relative to one antoher at successive relative assigned locations (L) on the surface as determined in the assiging step;
- modifying the surafce with the surface modifying tool (12) at the succesive relative assigned surface locations (L) to apply the decorative pattern to the surface.

**4.** A method according to Claim 2, wherein the order comprises a selection of where the decoration is mapped onto the surface, the mapping function being determined dependent on the selection.

**5.** A method according to Claim 2, wherein the order comprises a selection of a position of the pattern relative to an origin of the two dimensional surface coordinates (u,v) used to define the shape.

**6.** A method according to Claim 3, wherein the map defines the shape of the surface in terms of a Non Uniform Rational B Spline function.

**7.** A method according to Claim 3, the relative positions being computed from coordinates of the three dimensional location to which the successive positions map and oriented along a predetermined direction relative to normals to the surface at those locations.

**8.** A method according to Claim 3, wherein said scanning is along predetermined scanlines independent of a content of the pattern, the relative positions being computed independent of said content of the pattern.

**9.** A method according to Claim 3, wherein said pattern comprises a line along which the surface is to be modified uniformly, said scanning being along said line, the relative positions being computed dependent on the pattern.

**10.** A method according to Claim 1 and 3, said defining of the pattern being performed independent of the shaping of the surface.

**11.** A method according to Claim 10, said defining of the pattern being performed subsequent to the manufacture of objects comprising said surface.

**12.** A method according to Claim 10, the pattern being transmitted along a public switching network.

**Patentansprüche**

**1.** Verfahren zur Zuweisung eines zweidimensionalen Dekormusters an eine Oberfläche eines dreidimensionalen Objekts (10), wobei der Prozess die folgenden Schritte umfasst:

- Definieren der Form der Oberfläche des Objekts (10) unter Verwendung einer Abbildungsfunktion, die dreidimensionale Koordinaten (R) von Orten auf der genannten Oberfläche als Funktion von zweidimensionale Oberflächenkoordinatenpaaren (u, v) definiert;
- Definieren des Dekormusters als Folge von Punkten (P), die als zweidimensionale Musterkoordinatenpaare (xp, yp) spezifiziert worden sind;
- Zuweisen jedes der Punkte (P) des Dekormusters an Orte auf der Oberfläche des Objekts (10), indem erst jedem Punkt (P) des Dekormusters ein zweidimensionales Oberflächenkoordinatenpaar (u, v) zugewiesen wird und dann die Abbildungsfunktion verwendet wird, um jedem der zweidimensionalen Oberflächenkoordinatenpaare (u, v) entsprechende dreidimensionale Koordinaten (R) zuzuweisen.

**2.** Verfahren nach Anspruch 1, wobei das Verfahren weiterhin die folgenden Schritte umfasst:

- Herstellen des Objekts (10) als Teil einer Serie von Produkten, alle mit der definierten Form;
- Anbieten des Objekts (10) zum Kauf über ein öffentliches Netz;
- Einrichten eines Computers (28), um über das öffentliche Netz eine Bestellung für das Objekt (10) zu empfangen, wobei die Bestellung weiterhin ermöglicht, dass der Benutzer das an dem Objekt (10) anzubringende Dekormuster spezifiziert;
- Empfangen der Bestellung in Kombination mit dem Dekormuster mit Hilfe des Computers;
- Anbringen des Dekormusters an der Oberfläche an den zugewiesenen Orten, wie im Zuweisungsschritt festgelegt;
- Abliefern des Objekts (10) beim Käufer in Reaktion auf die Bestellung.

**3.** Verfahren nach Anspruch 1, wobei das Verfahren weiterhin die folgenden Schritte umfasst:

- Definieren der Form der Oberfläche des Objekts (10) unter Verwendung der Abbildungsfunktion, wobei die Abbildungsfunktion die Definition von Oberflächen zulässt, die sich in zumindest zwei Querrichtungen um einen Ort auf der genannten Oberfläche herum krümmen;
- Herstellen des Objekts (10), das die genannte, unter Verwendung der Abbildungsfunktion geformte Oberfläche umfasst;
- Abtasten einer Folge von Positionen in dem Muster während des Zuweisungsschrittes;
- Positionieren eines die Oberfläche modifizierenden Werkzeuges (12) und der Oberfläche relativ zu einander bei aufeinander folgenden relativen, zugewiesenen Orten (L) auf der Oberfläche, wie im Zuweisungsschritt festgelegt;
- Modifizieren der Oberfläche mit dem die Oberfläche modifizierenden Werkzeug (12) an den aufeinander folgenden relativen, zugewiesenen Oberflächenorten (L), um das Dekormuster an der Oberfläche anzubringen.

**4.** Verfahren nach Anspruch 2, bei dem die Bestellung eine Auswahl der Stellen umfasst, wo das Dekor auf der Oberfläche abgebildet werden soll, wobei die Abbildungsfunktion abhängig von der Auswahl ist.

**5.** Verfahren nach Anspruch 2, bei dem die Bestellung eine Auswahl einer Position des Musters relativ zu einem Ursprung der zum Definieren der Form verwendeten zweidimensionalen Oberflächenkoordinaten (u, v) umfasst.

**6.** Verfahren nach Anspruch 3, bei dem die Abbildung die Form der Oberfläche als eine nicht gleichförmige, rationalzahlige B-Spline-Funktion (NURBS-Funktion) definiert (NURBS = Non Uniform Rational B Spline).

**7.** Verfahren nach Anspruch 3, wobei die relativen Positionen aus Koordinaten des dreidimensionalen Ortes, auf den die aufeinander folgenden Positionen abbilden, berechnet und entlang einer zuvor bestimmte Richtung relativ zu Normalen zur Oberfläche an diesen Orten orientiert werden.

**8.** Verfahren nach Anspruch 3, bei dem das genannte Abtasten entlang zuvor bestimmter Abtastzeilen verläuft, unabhängig vom Inhalt des Musters, wobei die relativen Positionen unabhängig von dem genannten Inhalt des Musters berechnet werden.

**9.** Verfahren nach Anspruch 3, bei dem das genannte Muster eine Linie umfasst, entlang der die Oberfläche gleichmäßig modifiziert werden soll, wobei das genannte Abtasten entlang dieser Linie verläuft, wobei die relativen Positionen abhängig von dem Muster berechnet werden.

10. Verfahren nach Anspruch 1 und 3, wobei das genannte Definieren des Musters unabhängig vom Formen der Oberfläche ausgeführt wird.

11. Verfahren nach Anspruch 10, wobei das genannte Definieren des Musters nachfolgend auf die Herstellung von die genannten Oberfläche umfassenden Objekten ausgeführt wird.

12. Verfahren nach Anspruch 10, wobei das Muster über ein öffentliches Netz übertragen wird.


**Revendications**

1. Procédé pour appliquer un motif décoratif bidimensionnel sur une surface d'un objet tridimensionnel (10), le procédé comprenant les étapes suivantes :

   - définir la forme de la surface de l'objet (10) au moyen d'une fonction de mappage qui définit les coordonnées tridimensionnelles (R) d'emplacements sur ladite surface en fonction de paires de coordonnées (u,v) bidimensionnelles de surface;
   - définir le motif décoratif comme une série de points (P) spécifiés en termes de paires de coordonnées (xp, yp) bidimensionnelles de motif;
   - attribuer chacun des points (P) du motif décoratif à des emplacements sur la surface de l'objet (10) en attribuant d'abord une paire de coordonnées (u,v) bidimensionnelles de surface à chaque point (P) du motif décoratif, puis en utilisant la fonction de mappage pour attribuer des coordonnées tridimensionnelles correspondantes (R) à chacune des paires de coordonnées (u,v) bidimensionnelles de surface.

2. Procédé suivant la revendication 1, le procédé comprenant en outre les étapes suivantes :

   - fabriquer l'objet (10) comme une partie d'une série de produits, présentant tous la forme définie;
   - offrir l'objet (10) à la vente par le biais d'un réseau public de commutation;
   - installer un ordinateur (28) pour recevoir une commande de l'objet (10) par le biais du réseau commuté public, la commande permettant en outre à l'utilisateur de spécifier le motif décoratif à appliquer à l'objet (10);
   - recevoir la commande en combinaison avec le motif décoratif par le biais de l'ordinateur;
   - appliquer le motif décoratif à la surface aux emplacements attribués comme déterminé à l'étape d'attribution;
   - livrer l'objet (10) à l'acheteur en réponse à la commande.

3. Procédé suivant la revendication 1, le procédé comprenant en outre les étapes suivantes :

   - définir la forme de la surface de l'objet (10) en utilisant la fonction de mappage, de sorte que la fonction de mappage permet de définir les surfaces qui s'incurvent dans au moins deux directions transversales autour d'un emplacement sur ladite surface;
   - fabriquer l'objet (10) comprenant ladite surface mise en forme au moyen de la fonction de mappage;
   - pendant l'étape d'attribution, scanner une série de positions dans le motif;
   - positionner un outil de modification de surface (12) et la surface l'un par rapport à l'autre à des emplacements successifs attribués de manière relative (L) sur la surface comme déterminé dans l'étape d'attribution;
   - modifier la surface avec l'outil de modification de surface (12) aux emplacements de surface successifs (L) attribués de manière relative pour appliquer le motif décoratif à la surface.

4. Procédé suivant la revendication 2, dans lequel la commande comprend une sélection de l'endroit où la décoration est mappée sur la surface, la fonction de mappage étant déterminée en fonction de la sélection.

5. Procédé suivant la revendication 2, dans lequel la commande comprend une sélection de la position du motif par rapport à une origine des coordonnées (u,v) bidimensionnelles de surface (u,v) utilisées pour définir la forme.

6. Procédé suivant la revendication 3, dans lequel la mappe définit la forme de la surface en termes d'une fonction Non Uniform Rational B Spline.

7. Procédé suivant la revendication 3, les positions relatives étant calculées à partir de coordonnées de l'emplacement tridimensionnel sur lequel les positions successives sont mappées et orientées le long d'une direction prédéterminée par rapport à des normales à la surface en ces emplacements.

8. Procédé suivant la revendication 3, dans lequel ledit scanning s'effectue sur des lignes de balayage prédéterminées indépendantes d'un contenu du motif, les positions relatives étant calculées indépendamment dudit contenu du motif.

9. Procédé suivant la revendication 3, dans lequel ledit motif comprend une ligne le long de laquelle la surface doit être modifiée uniformément, ledit scanning s'effectuant sur ladite ligne, les positions relatives étant calculées en fonction du motif.

10. Procédé suivant la revendication 1 et 3, ladite définition du motif s'effectuant indépendamment de la forme de la surface.

11. Procédé suivant la revendication 10, ladite définition du motif s'effectuant après la fabrication des objets comprenant ladite surface.

12. Procédé suivant la revendication 10, le motif étant transmis sur un réseau public de commutation.

FIG. 1

FIG. 2

FIG. 3